# FASCICULE DE BREVET EUROPEEN

(11) **EP 0 561 992 B1**
(45) Date de publication et mention de la délivrance du brevet: **22.03.1995**
(21) Numéro de dépôt: 92902328.1
(22) Date de dépôt: 13.12.1991
(51) Int. Cl.: B05D 5/12, B05D 7/24, B05D 7/02

(54) **PROCEDE POUR DEPOSER UN FILM MINCE ANTISTATIQUE A LA SURFACE D'UN OBJET FA ONNE**
VERFAHREN ZUR ABLAGERUNG EINES DÜNNEN ANTISTATISCHEN FILMS AUF DER OBERFLÄCHE EINES GEGENSTANDS
METHOD FOR DEPOSITING A THIN ANTISTATIC FILM ON THE SURFACE OF A SHAPED OBJECT

(30) Priorité: 14.12.1990 FR 9015671
(43) Date de publication de la demande: 29.09.1993
(73) Titulaire: ELF AQUITAINE, 92400 Courbevoie (FR)
(72) Inventeur: VERZARO, Francis, F-64121 Serres-Castet (FR); SEGUI, Yvan, F-31130 Balma (FR)
(74) Mandataire: Boillot, Marc
(86) Numéro de dépôt international: FR9101010
(87) Numéro de publication internationale: WO9210310

(56) Documents cités:
- EP-A- 0 127 149
- WORLD PATENTS INDEX LATEST Week 20, 1986 Derwent Publications Ltd., London, GB;AN 86-127680
- VIDE, LES COUCHES MINCES Nr 212(supplément), 1982, PARIS FR pages 331-335; J-P.BEAUDELLE: 'Couches minces de polymère obtenues par polymérisation del'éthylène dans une décharge électrique' Voir parties 2.Appareillage 3.
- Condition de déposition
- PATENT ABSTRACTS OF JAPAN vol. 6, no. 208 (C-130)20 Octobre 1982

## Description

L'invention se rapporte à un procédé pour déposer un film mince et antistatique à la surface d'un objet façonné, dont au moins la partie superficielle est en un polymère ou copolymère de styrène, et conférer ainsi audit objet un antistatisme durable.

Le polystyrène, modifié ou non par un élastomère comme le polybutadiène, se transforme facilement par moulage par injection ou par extrusion et thermoformage en objets façonnés qui trouvent un débouché dans le domaine du conditionnement et dans celui des biens d'équipement.

Le polystyrène étant un isolant électrique, comme la quasi-totalité des matières plastiques, les objets façonnés en polystyrène accumulent en surface les charges électrostatiques avec comme inconvénients d'une part l'attraction des poussières par la surface chargée électrostatiquement et d'autre part la production de décharges électrostatiques au toucher de l'objet pendant sa manutention ou son utilisation.

Actuellement, la solution la plus courante pour éliminer l'électricité statique portée par les objets façonnés à partir d'une matière plastique et notamment à partir d'un polystyrène, consiste à incorporer à ladite matière plastique, avant son façonnage, un additif, dit additif antistatique, choisi parmi les composés chimiques, par exemple dérivés d'ammonium quaternaire ou encore amines éthoxylées, qui comportent une partie polaire et d'autre part sont susceptibles de migrer à la surface de l'objet façonné, ce qui permet d'augmenter la conductivité de surface dudit objet et ce faisant de réduire la tendance de l'objet façonné à accumuler les charges électrostatiques en surface.

Une telle façon de procéder présente certains inconvénients majeurs. Tout d'abord, l'effet antistatique n'a qu'une durée limitée dans le temps, environ 1 à 2 mois, et dans tous les cas on observe une décroissance dudit effet au cours du temps. Ce phénomène peut être expliqué par le fait que les additifs antistatiques ne sont pas liés à la matrice polymérique avec comme conséquence qu'un simple lavage de la surface de l'objet façonné peut éliminer lesdits additifs. En outre, l'effet antistatique est mal contrôlé. Après disparition de cet effet, il peut apparaître au cours du temps une deuxième vague de diffusion de l'additif antistatique vers la surface de l'objet et l'effet antistatique peut réapparaître lorsque cette vague atteint ladite surface. Toutefois, durant ce temps, l'objet a été privé de toute propriété antistatique. De plus, l'effet antistatique dépend du degré d'humidité de l'air ambiant et, en atmosphère sèche, on observe une diminution sensible dudit effet.

La citation JP-A-61064734 concerne un procédé pour éliminer l'électricité statique portée par des objets façonnés en matière plastique, dans lequel on maintient lesdits objets au contact d'un flux gazeux réactif, du type plasma froid, produit en générant un champ électrique radiofréquence dans une atmosphère gazeuse renfermant une composante hydrocarbonée.

Dans l'article de J.P. BEAUDELLE, H. CARCHANO et R. LOUSSIER intitulé "Couches minces de polymère obtenues par polymérisation de l'éthylène dans une décharge électrique" et publié dans la revue VIDE, LES COUCHES MINCES, N° 212 (Supplément), 1982, Paris (France), pages 331 à 335, les auteurs présentent une étude du dépôt de couches minces polymériques sur des substrats de verre ou de métal par polymérisation de l'éthylène dans une décharge électrique générée par une tension alternative de fréquence variant de 10kHz à 100 kHz, l'éthylène étant utilisé en mélange avec de l'argon. Aux pressions de 1,4 et 0,7 Torr (186 Pa et 93 Pa) utilisées dans l'étude, il apparaît des défauts d'adhérence des films déposés lorsque l'épaisseur du film atteint environ 80 nm.

L'invention propose un procédé pour déposer un film mince antistatique à la surface d'un objet façonné, dont au moins la partie superficielle est en un polymère ou copolymère de styrène, et conférer ainsi audit objet revêtu un antistatisme durable, par suite des excellentes propriétés antistatiques du film déposé et de son adhérence satisfaisante à l'objet façonné.

Le procédé selon l'invention est du type dans lequel on produit un flux gazeux réactif du type plasma froid en générant un champ électrique dans une atmosphère gazeuse constituée, en partie ou en totalité, d'une composante hydrocarbonée consistant en un ou plusieurs hydrocarbures en C1 à C7, ladite atmosphère gazeuse ayant une pression totale comprise entre 1 Pa et 60 Pa, plus particulièrement entre 1 Pa et 50 Pa, et l'on maintient l'objet façonné, à une température inférieure à son point de ramollissement et de préférence entre 10°C et 60°C, au contact du flux gazeux réactif ainsi produit pour déposer à la surface dudit objet un film dérivant de la composante hydrocarbonée et il se caractérise en ce que le champ électrique utilisé pour produire le flux gazeux réactif est un champ continu, alternatif ou pulsé possédant une fréquence inférieure à 500 kHz et généré avec une densité de puissance inférieure à 150 mW par cm3 de plasma et en ce que la durée de maintien de l'objet façonné au contact du flux gazeux réactif est telle que le film déposé à la surface dudit objet présente une épaisseur comprise entre 100 nm et 1000 nm.

Comme il est connu dans l'art (cf., par exemple, l'encyclopédie de KIRK-OTHMER intitulée ENCYCLOPEDIA OF CHEMICAL TECHNOLOGY, Third Edition, Supplement Volume, page 614), le terme "plasma froid" désigne un plasma gazeux hors équilibre thermodynamique pour lequel la température des électrons est très élevée par rapport à la température des autres espèces contenues dans le plasma, cette dernière température restant proche de la température ambiante.

Avantageusement, le champ électrique est généré avec une densité de puissance plus spécialement comprise entre 5 mW et 120 mW par cm³ de plasma.

Dans la mise en oeuvre du procédé selon l'invention, la production du flux gazeux réactif, par action du champ électrique sur l'atmosphère gazeuse constituée en partie ou en totalité de la composante hydrocarbonée, et la mise en contact de l'objet façonné à traiter avec le flux gazeux réactif sont généralement réalisées simultanément dans une même zone de traitement dite zone plasma. Dans ce cas, l'objet façonné à traiter est placé dans la zone plasma pendant toute la durée du traitement. Il est également possible de produire le flux gazeux réactif dans une première zone, dite zone plasma, puis d'effectuer dans une seconde zone la mise en contact de l'objet façonné à traiter avec ledit flux gazeux réactif.

Lorsque l'atmosphère gazeuse n'est constituée qu'en partie par la composante hydrocarbonée, le complément consiste en une composante gazeuse non hydrocarbonée formée d'un ou plusieurs gaz tel que l'hydrogène, l'azote, les gaz rares et notamment l'argon. L'atmosphère gazeuse ainsi constituée a une pression totale comprise dans les intervalles définis précédemment.

Les hydrocarbures en C₁ à C₇ à partir desquels on peut former la composante hydrocarbonée sont notamment des alcanes en C₁ à C₇ tels que méthane, éthane, propane, butane, des alcènes en C₂ à C₇ tels que éthylène, propylène, butène, des alcynes en C₂ à C₇ tels que acétylène, ou encore des hydrocarbures cycliques en C₄ à C₇ tels que benzène, toluène, cyclohexane.

Le champ électrique continu, alternatif ou pulsé de fréquence inférieure à 500 kHz et de préférence allant de 0Hz (champ continu) à 100 kHz, que l'on utilise selon l'invention, peut être généré par tout système approprié de génération d'un champ électrique fonctionnant en courant continu, alternatif ou pulsé. Le courant alternatif ou pulsé utilisé pour générer le champ électrique alternatif ou pulsé a une fréquence inférieure à 500 kHz et de préférence allant de 10 Hz à 100 kHz. Le système générateur du champ électrique peut être, par exemple, un système du type à couplage inductif ou un système du type à couplage capacitif utilisant deux électrodes entre lesquelles le champ électrique est généré.

Le polymère ou copolymère de styrène, qui forme au moins la partie superficielle de l'objet façonné à traiter selon l'invention et qui le plus souvent constitue la totalité de la matière dudit objet, peut être un homopolymère de styrène, un copolymère de styrène et d'un ou plusieurs comonomères insaturés tels que alphaméthylstyrène, acrylonitrile, anhydride maléique, pour lequel le styrène est en proportion pondérale majoritaire, un homopolymère ou un copolymère de styrène tel que précité, en particulier copolymère styrène/acrylonitrile, modifié par incorporation d'un élastomère, notamment polybutadiène ou copolymère éthylène/propylène, dans la masse dudit homopolymère ou copolymère de styrène au cours de sa synthèse, ou encore un copolymère séquencé de styrène et d'un diène conjugué tel que butadiène ou isoprène, à teneur pondérale majoritaire en styrène.

Le polymère ou copolymère de styrène, qui est utilisé pour fabriquer les objets façonnés, notamment châssis de radio ou de téléviseur, pièces de réfrigérateurs, éléments pour sanitaires, meubles, emballages laitiers, boîtes de rangement, que l'on traite selon l'invention, peut encore renfermer des additifs tels que des charges, des colorants, des pigments, des agents de renforcement fibreux comme les fibres de verre, des antioxydants, des stabilisants thermiques.

L'invention est illustrée par l'exemple suivant donné à titre non limitatif.

### EXEMPLE :

A partir d'un polystyrène choc (polystyrène modifié par un polybutadiène) exempt d'additif antistatique, on réalisait des feuilles ayant une épaisseur de 0,35 mm en opérant par moulage par compression et on prélevait sur ces feuilles des échantillons en forme de disques ayant un diamètre égal à 5 cm, puis soumettait lesdits échantillons à un traitement selon l'invention

Le traitement des échantillons était réalisé dans une enceinte de type capacitif dans laquelle étaient montées deux électrodes horizontales en forme de disques de 7 cm de diamètre et distants de 4 cm, ces électrodes étant connectées aux bornes d'un générateur de courant alternatif extérieur à l'enceinte, ledit générateur fournissant un courant électrique alternatif ayant une fréquence de 20 kHz avec une densité de puissance de 10 mW par cm³ de plasma. L'enceinte de traitement était pourvue, en outre, d'un conduit d'amenée du précurseur gazeux du flux gazeux réactif, débouchant à proximité de l'espace entre les électrodes, et était également connectée à l'aspiration d'une pompe primaire permettant de maintenir la pression désirée à l'intérieur de l'enceinte.

L'échantillon à traiter était placé entre les électrodes de l'enceinte de manière à reposer sur l'électrode inférieure et de ce fait ledit échantillon se trouvait directement dans la zone d'action du flux gazeux réactif résultant de l'action du champ électrique, prenant naissance entre les électrodes lorsque ces dernières sont mises sous tension, sur le précurseur gazeux, à savoir méthane dans cet exemple, injecté dans l'enceinte, à l'intérieur de laquelle la pression était maintenue à une valeur de 10 Pa par action de la pompe primaire. L'échantillon à traiter était à température ambiante.

Après une durée de traitement du disque échantillon par le flux gazeux réactif égale à 30 minutes, qui permettait de déposer un film antistatique, dérivant du précurseur méthane et présentant une épaisseur d'environ 210 nm, à la surface dudit disque échantillon, ce dernier était retiré de l'enceinte et laissé au contact de l'atmosphère ambiante.

Les disques échantillons, traités selon l'invention, étaient ensuite soumis à des mesures d'antistatisme après des durées variables.

Aux fins de comparaison, à partir d'un polystyrène choc antistatique commercial consistant en un polystyrène choc similaire à celui utilisé pour le traitement selon l'invention mais rendu antistatique par incorporation, dans sa masse, de 0,6 % en poids d'un additif antistatique du type amine éthoxylée, on préparait des disques témoins de mêmes dimensions que les disques traités selon l'invention, puis soumettait également les disques témoins à des mesures d'antistatisme comparables à celles effectuées sur les disques traités selon l'invention.

Dans son principe, la mesure d'antistatisme consiste à déposer, par décharge couronne, une quantité déterminée de charges en une zone de la surface du disque à étudier, puis à mesurer en fonction du temps, à l'aide d'une sonde électrostatique, la variation du potentiel de surface en cette zone.

Une décroissance lente du potentiel de surface traduit un mauvais comportement antistatique du substrat, tandis qu'une décroissance très rapide dudit potentiel est liée à un très bon comportement antistatique du substrat.

Le comportement antistatique d'un substrat peut être caractérisé par une grandeur appelée temps de demi-décharge (en abrégé t^{1/2}) et représentant le temps au bout duquel le potentiel de surface en un point du substrat est égal à la moitié du potentiel de surface initial après la charge. Les valeurs du temps de demi-décharge peuvent aller de zéro (cas d'un substrat conducteur) à l'infini (cas d'un substrat parfaitement isolant).

On donne dans le tableau I les valeurs (moyenne sur dix essais) du temps de demi-décharge déterminées pour les disques échantillons traités selon l'invention au bout de différentes durées D représentant le temps écoulé à partir de la date de traitement desdits échantillons.

Le tableau I renferme également, aux fins de comparaison, les valeurs (moyenne sur dix essais) du temps de demi-décharge déterminées pour les disques témoins au bout de différentes durées D représentant le temps écoulé à partir de la fabrication desdits disques témoins.

**TABLEAU I**

| Echantillons | Selon l'invention | | | Témoins | | |
|---|---|---|---|---|---|---|
| D (jours) | 0 | 77 | 200 | 4 | 12 | 60 |
| t^{1/2} secondes | 60 | 85 | 95 | 58 | 66 | >200 |

L'examen des résultats figurant au tableau I fait ressortir que les échantillons traités selon l'invention pour les rendre antistatiques présentent un comportement antistatique substantiellement amélioré dans le temps par rapport aux échantillons témoins rendus antistatiques par la solution conventionnelle consistant à incorporer un additif antistatique dans la masse du polymère.

## Revendications

1. Procédé pour déposer un film mince antistatique à la surface d'un objet façonné, dont au moins la partie superficielle est en un polymère ou copolymère de styrène, et conférer ainsi audit objet un antistatisme durable, ledit procédé étant du type dans lequel on produit un flux gazeux réactif du type plasma froid en générant un champ électrique dans une atmosphère gazeuse constituée en partie ou en totalité d'une composante hydrocarbonée consistant en un ou plusieurs hydrocarbures en C₁ à C₇, ladite atmosphère gazeuse ayant une pression totale comprise entre 1 Pa et 60 Pa, et l'on maintient l'objet façonné, à une température inférieure à son point de ramollissement, au contact du flux gazeux réactif ainsi produit pour déposer à la surface dudit objet un film dérivant de la composante hydrocarbonée et il se caractérise en ce que le champ électrique utilisé pour produire le flux gazeux réactif est un champ continu, alternatif ou pulsé possèdant une fréquence inférieure à 500 kHz et généré avec une densité de puissance inférieure à 150 mW/ par cm³ de plasma et en ce que la durée de maintien de l'objet façonné au contact du flux gazeux réactif est telle que le film déposé à la surface dudit objet présente une épaisseur comprise entre 100 nm et 1000 nm.

2. Procédé selon la revendication 1, caractérisé en ce que le champ électrique généré pour produire le flux gazeux réactif a une fréquence allant de 0Hz à 100 kHz.

3. Procédé selon la revendication 1 ou 2, caractérisé en ce que la pression de l'atmosphère gazeuse est comprise entre 1 Pa et 50 Pa.

4. Procédé selon l'une des revendications 1 à 3, caractérisé en ce que l'objet façonné est maintenu à une température comprise entre 10°C et 60°C au contact du flux gazeux réactif.

5. Procédé selon l'une des revendications 1 à 4, caractérisé en ce que l'atmosphère gazeuse consiste en totalité en la composante hydrocarbonée.

6. Procédé selon l'une des revendications 1 à 4, caractérisé en ce que, outre la composante hydrocarbonée, l'atmosphère gazeuse renferme également une composante gazeuse non hydrocarbonée formée d'un ou plusieurs gaz tels que l'hydrogène, l'azote, les gaz rares et notamment l'argon.

7. Procédé selon l'une des revendications 1 à 6, caractérisé en ce que les hydrocarbures en C₁ à C₇ à partir desquels on forme la composante hydrocarbonée sont choisis parmi les alcanes en C₁ à C₇, notamment méthane, éthane, propane, butane, les alcènes en C₂ à C₇, notamment éthylène, propylène, butène, les alcynes en C₂ à C₇, notamment acétylène, et les hydrocarbures cycliques en C₄ à C₇, notamment benzène, toluène, cyclohexane.

8. Procédé selon l'une des revendications 1 à 7, caractérisé en ce que le polymère ou copolymère de styrène, qui forme au moins la partie superficielle de l'objet façonné à traiter et qui le plus souvent constitue la totalité de la matière dudit objet, est un homopolymère de styrène, un copolymère de styrène et d'un ou plusieurs comonomères insaturés tels que alphaméthylstyrène, acrylonitrile, anhydride maléique, pour lequel le styrène est en proportion pondérale majoritaire, un homopolymère ou un copolymère de styrène tel que précité, en particulier copolymère styrène/acrylonitrile, modifié par incorporation d'un élastomère, notamment polybutadiène ou copolymère étylène/propylène, dans la masse dudit homopolymère ou copolymère de styrène au cours de sa synthèse, ou encore un copolymère séquencé de styrène et d'un diène conjugué tel que butadiène ou isoprène, à teneur pondérale majoritaire en styrène.

9. Procédé selon l'une des revendications 1 à 8, caractérisé en ce que la production du flux gazeux réactif et la mise en contact dudit flux gazeux réactif avec l'objet façonné sont réalisées simultanément dans une même zone de traitement, dite zone plasma.

10. Procédé selon la revendication 9, caractérisé en ce que le champ électrique utilisé pour la production du flux gazeux réactif est généré entre deux électrodes, l'objet façonné à traiter étant placé entre lesdites électrodes.

11. Procédé selon l'une des revendications 1 à 8, caractérisé en ce que l'on produit le flux gazeux réactif dans une première zone, dite zone plasma, et l'on effectue dans une seconde zone la mise en contact de l'objet façonné à traiter avec le flux gazeux réactif produit dans la première zone.

12. Procédé selon l'une des revendications 1 à 11, caractérisé en ce que le champ électrique est généré avec une densité de puissance comprise entre 5 mW et 120 mW par cm³ de plasma.

## Claims

1. Process for depositing a thin anti-static film on the surface of a shaped object, of which at least the outer portion is of a styrene polymer or copolymer, and thus to confer a lasting anti-static property on said object, said process being of the type in which a reactive gaseous flux of the cold plasma type is produced by generating an electric field in a gaseous atmosphere wholly or partially constituted by a hydrocarbon component consisting of one or more C₁ to C₇ hydrocarbons, said gaseous atmosphere having a total pressure of between 1 Pa and 60 Pa, and in which the shaped object is maintained, at a temperature lower than the melting point thereof, in contact with the gaseous flux which is thus produced so as to deposit, on the surface of said object, a film which is derived from the hydrocarbon component and is characterised in that the electric field used to produce the reactive gaseous flux is a continuous, alternating or pulsed field having a frequency which is less than 500 kHz and generated with a power density which is less than 150 mW/per cm³ of plasma, and in that the duration for which the shaped object is kept in contact with the reactive gaseous flux is such that the film deposited on the surface of said object is between 100 nm and 1000 nm thick.

2. Process according to Claim 1, characterised in that the electric field generated to produce the reactive gaseous flow has a frequency from 0 Hz to 100 kHz.

3. Process according to Claim 1 or 2, characterised in that the pressure of the gaseous atmosphere is between 1 Pa and 50 Pa.

4. Process according to any one of Claims 1 to 3, characterised in that the shaped object is maintained, at a temperature between 10°C and 60°C, in contact with the reactive gaseous flux.

5. Process according to any one of Claims 1 to 4, characterised in that the gaseous atmosphere consists entirely of the hydrocarbon component.

6. Process according to any one of Claims 1 to 4, characterised in that, in addition to the hydrocarbon component, the gaseous atmosphere also contains a non-hydrocarbon gaseous component formed of one or more gases such as hydrogen, nitrogen, inert gases, in particular, argon.

7. Process according to any one of Claims 1 to 6, characterised in that the C₁ to C₇ hydrocarbons from which the hydrocarbon component is formed are selected from C₁ to C₇ alkanes, in particular methane, ethane, propane, butane, C₂ to C₇ alkenes, in particular ethylene, propylene, butene, C₂ to C₇ alkynes, in particular acetylene, and C₄ to C₇ cyclic hydrocarbons, in particular benzene, toluene, cyclohexane.

8. Process according to any one of Claims 1 to 7, characterised in that the styrene polymer or copolymer, which forms at least the outer part of the shaped object to be treated, and which, most frequently, constitutes the whole of the material of said object, is a styrene homopolymer, a copolymer of styrene and one or more non-saturated comonomers such as alphamethylstyrene, acrylonitrile, maleic anhydride, in which the styrene is in the greater proportion by weight, a styrene homopolymer or copolymer of styrene as defined hereinabove, in particular styrene/acrylonitrilecopolymer, modified by the incorporation of an elastomer, in particular polybutadiene or an ethylene/propylene copolymer, into the mass of said styrene homopolymer or copolymer in the course of the synthesis thereof, or a block copolymer of styrene, and a conjugated diene such as butadiene or isoprene, with a major proportion by weight of styrene.

9. Process according to any one of Claims 1 to 8, characterised in that the production of the reactive gaseous flux and the bringing of said reactive gaseous flux into contact with the shaped object are performed simultaneously in the same treatment zone, called the plasma zone.

10. Process according to Claim 9, characterised in that the electric field used for the production of the reactive gaseous flux is generated between two electrodes, the shaped object to be treated being placed between said electrodes.

11. Process according to any one of Claims 1 to 8, characterised in that the reactive gaseous flux is produced in a first zone, called the plasma zone and, in a second zone, the shaped object to be treated is brought into contact with the reactive gaseous flux produced in the first zone.

12. Process according to any one of Claims 1 to 11, characterised in that the electric field is generated with a power density of between 5 mW and 120 mW per cm³ of plasma.

## Patentansprüche

1. Verfahren zur Abscheidung eines dünnen antistatischen Films auf der Oberfläche eines Formkörpers, wobei wenigstens der oberflächliche Anteil des Formkörpers aus einem Styrolpolymer oder -copolymer besteht, um auf diese Weise dem Körper dauerhafte antistatische Eigenschaften zu verleihen, wobei ein reaktiver Gasstrom von der Art eines kalten Plasmas erzeugt wird, indem man in einer Gasatmosphäre, die teilweise oder zur Gänze aus einer Kohlenwasserstoffkomponente besteht, die aus einem oder mehreren C₁₋₇-Kohlenwasserstoffen zusammengesetzt ist, ein elektrisches Feld erzeugt, wobei die Gasatmosphäre einen Gesamtdruck zwischen 1 Pa und 60 Pa aufweist, und man den Formkörper bei einer Temperatur unterhalb seines Erweichungspunktes mit dem auf diese Weise erzeugten reaktiven Gasstrom in Berührung bringt, um auf der Oberfläche des Körpers einen aus der Kohlenwasserstoffkomponente gebildeten Film abzuscheiden, dadurch **gekennzeichnet,** daß das für die Erzeugung des reaktiven Gasstroms verwendete elektrische Feld ein durch Gleich-, Wechsel- oder Impulsstrom erzeugtes Feld ist, das eine Frequenz von unter 500 kHz aufweist und mit einer Leistungsdichte von unter 150 mW pro cm³ Plasma erzeugt wird und der Formkörper solange mit dem reaktiven Gasstrom in Berührung gebracht wird, bis der auf der Oberfläche des Körpers abgeschiedene Film eine Dicke zwischen 100 nm und 1000 nm aufweist.

2. Verfahren nach Anspruch 1, dadurch **gekennzeichnet,** daß das zur Bildung des reaktiven Gasstroms erzeugte elektrische Feld eine Frequenz zwischen 0 Hz und 100 kHz aufweist.

3. Verfahren nach Anspruch 1 oder 2, dadurch **gekennzeichnet,** daß der Druck der Gasatmosphäre zwischen 1 Pa und 50 Pa liegt.

4. Verfahren nach einem der Ansprüche 1 bis 3, dadurch **gekennzeichnet,** daß der Formkörper bei einer Temperatur zwischen 10 und 60°C mit dem reaktiven Gasstrom in Berührung gebracht wird.

5. Verfahren nach einem der Ansprüche 1 bis 4, dadurch **gekennzeichnet,** daß die Gasatmosphäre zur Gänze aus der Kohlenwasserstoffkomponente besteht.

6. Verfahren nach einem der Ansprüche 1 bis 4, dadurch **gekennzeichnet,** daß die Gasatmosphäre außer der Kohlenwasserstoffkomponente auch noch eine aus einem oder mehreren Gasen wie Wasserstoff, Stickstoff, den Edelgasen und insbesondere Argon gebildete gasförmige Nichtkohlenwasserstoffkomponente enthält.

7. Verfahren nach einem der Ansprüche 1 bis 6, dadurch **gekennzeichnet,** daß die C₁₋₇-Kohlenwasserstoffe, aus denen man die Kohlenwasserstoffkomponente bildet, ausgewählt werden unter C₁₋₇-Alkanen, insbesondere unter Methan, Ethan, Propan, Butan, den C₂₋₇-Alkenen, insbesondere Ethylen, Propylen, Buten, den C₂₋₇-Alkinen, insbesondere Acetylen, und den cyclischen C₄₋₇-Kohlenwasserstoffen, insbesondere Benzol, Toluol, Cyclohexan.

8. Verfahren nach einem der Ansprüche 1 bis 7, dadurch **gekennzeichnet,** daß das Styrolpolymer oder -copolymer, das wenigstens den oberflächlichen Anteil des zu behandelnden Formkörpers bildet und meist die Gesamtheit des Stoffes des Körpers ausmacht, ein Styrolhomopolymer, ein Copolymer aus Styrol und einem oder mehreren ungesättigten Comonomeren wie α-Methylstyrol, Acrylnitril, Maleinsäureanhydrid, wobei das Styrol den Hauptanteil des Gewichts ausmacht, ein Styrolhomopolymer oder -copolymer, wie oben angegeben, insbesondere ein Styrol-Acrylnitril-Copolymer, das durch Einarbeitung eines Elastomers, insbesondere von Polybutadien oder Ethylen-Propylen-Copolymer in die Masse des Styrolhomopolymers oder -copolymers im Verlaufe seiner Synthese modifiziert wurde, oder ein Blockcopolymer aus Styrol und einem konjugierten Dien wie Butadien oder Isopren, wobei der Hauptanteil des Gewichts auf Styrol entfällt, ist.

9. Verfahren nach einem der Ansprüche 1 bis 8, dadurch **gekennzeichnet,** daß die Herstellung des reaktiven Gasstroms und dessen Kontaktierung mit dem Formkörper gleichzeitig in ein und derselben als Plasmazone bezeichneten Behandlungszone durchgeführt werden.

10. Verfahren nach Anspruch 9, dadurch **gekennzeichnet,** daß das für die Bildung des reaktiven Gasstroms verwendete elektrische Feld zwischen zwei Elektroden erzeugt wird, wobei der zu behandelnde Formkörper zwischen den Elektroden angeordnet ist.

11. Verfahren nach einem der Ansprüche 1 bis 8, dadurch **gekennzeichnet,** daß man den reaktiven Gasstrom in einer als Plasmazone bezeichneten ersten Zone erzeugt und in einer zweiten Zone die Kontaktierung des zu behandelnden Formkörpers mit dem in der ersten Zone erzeugten reaktiven Gasstrom durchführt.

12. Verfahren nach einem der Ansprüche 1 bis 11, dadurch **gekennzeichnet,** daß das elektrische Feld bei einer Leistungsdichte zwischen 5 mW und 120 mW pro cm³ Plasma erzeugt wird.
